# EUROPEAN PATENT APPLICATION

(11) **EP 1 795 658 A1**
(43) Date of publication of application: **13.06.2007**
(21) Application number: 05790925.1
(22) Date of filing: 23.08.2005
(51) Int. Cl.: E03B 3/28, B01D 5/00

(54) **METHOD OF OBTAINING WATER FROM AN ATMOSPHERIC AIR MASS AND MACHINE FOR OBTAINING WATER BY CONDENSING THE MOISTURE FROM AN AIR MASS**

(30) Priority: 24.09.2004 ES 200402290; 15.11.2004 ES 200402739; 15.11.2004 ES 200402740
(71) Applicant: Ermakov, Alexander, 33428 Coruño-Llanera (Asturias) (ES)
(72) Inventor: Ermakov, Alexander, 33428 Coruño-Llanera (Asturias) (ES)
(74) Representative: Pons Arino, Angel
(86) International application number: PCT/ES2005/000471
(87) International publication number: WO 2006/040370

(57) **Abstract**

A procedure for obtaining water from a mass of atmospheric air comprising the following stages. Creating a flow of air and circulating it through the secondary circuit of an exchanging element for preliminary cooling, which may or may not initiate the change of water's state from vapour to liquid; subjecting the flow of pre-cooled air to further cooling capable of lowering the temperature to at least below the dew point in order to originate the change from vapour to liquid or continue to the process if it was initiated during the preliminary cooling; collecting the condensed and/or frozen water; recirculating the flow of dry, cool air through the primary circuit of the exchangers in order to use the residual cold for preliminary cooling.

## Description

### OBJECT OF THE INVENTION

This invention refers to a procedure for obtaining water from a mass of atmospheric air and a machine for obtaining water by condensing the humidity in a mass of air.

### BACKGROUND OF THE INVENTION

All natural air masses are humid, i.e., they contain a certain amount of water vapour.

It is possible to recover that water by separating it from the gases and other components of the air.

The procedure of the proposed invention involves such a separation by changing from a gaseous state to a liquid or solid state, while the rest of the gases in the air remain in their gaseous state.

The intention behind this invention is therefore to protect a procedure for provoking the condensation of water and separating it from the air mass.

It also includes specific improvements for the procedure, especially if the definitive cooling is carried out by a conventional cooling machine based on a compressor, evaporator and condensator, and the proposed machine for the implementation of the procedure.

### DESCRIPTION OF THE INVENTION

The procedure to which the invention refers is an ideal means of obtaining water from a mass of wet air. Any atmospheric mass will serve the purpose.

According to the invention, the procedure includes the following phases:
- Creating a flow from the mass of air and making it circulate through at least one heat-exchanging element. The purpose of creating such a flow is to "level" or manage the mass of air to be dried. The water is separated by condensation, which requires cooling. Circulating the flow of air through the heat exchanger is a form of preliminary cooling that reduces the energy needed for the definitive cooling that will take place during a later phase and/or may even initiate the condensation of the water from the flow of air.
- The pre-cooled flow of air is then subjected to definitive cooling which is capable of bringing the temperature to at least below the dew point but preferably, depending on the saturation of the water, above 0°C in order to prevent it from changing to a solid state, making it easier to collect.
- Collection of the separated water.
- Recirculation of the outgoing flow of cold dry air through the heat exchanger, making use of the residual cold to for the preliminary cooling of the incoming flow of air, thereby improving performance and at the same time ensuring that the temperature of the outgoing flow of air is higher and that there is less of a differential between that and the temperature of the incoming flow of air. This cuts down on the energy required for the definitive cooling and reduces the environmental impact of the outgoing flow.

The following improvements may be added to this procedure:
- Optional preliminary cooling before the flow of air enters the heat exchanger for the second time. Preliminary cooling decreases the energy required for subsequent cooling. It can be done with conventional cooling machines or preferably by natural means such as using heat exchangers to take advantage of the temperature differential between the outgoing air and the incoming air from a nearby course of water or similar. The residual cold from the artificially cooled water can also be used for other purposes, such as from a water-cooling machine in a hospital.
- Likewise, and in those cases where the definitive cooling is done by a conventional cooling machine that uses a compressor-condensator-evaporator, the definitive cooling is done by the evaporator and the dried flow of air exiting the air-air heat exchanger will circulate through the cooling machine's condensator, thereby using the residual cold to cooperate in the condensation of the machine cooling gas, reducing the amount of energy required for the process. If the temperature of the flow of air coming in from the outside is too high, in hot environments, the interior flow of air, after exiting the air-air exchanger and before incoming the condensator, will be mixed with outside air to cool the heat generated in the condensator, equivalent to the sum of that from the evaporator (taking the flow of incoming air) plus that equivalent to the compressor consumption also carried by the cooling gas.

To implement the procedure, a machine is proposed that includes a sweeping device with a frame, a device for the taking in and expelling the flow of wet air generated by the operation of one or more turbines or internal fans.

Also inside the sweeping device is a set of cooling equipment, ideally a conventional one composed of a compressor, evaporator and condensator, although it could also be an exchanger that uses the lower temperature of other media, such as liquids (an air current, a flow of cold water from a machine, etc).

The cooling equipment must be capable of continuously reducing the temperature of the incoming flow of air to below the dew point in order to provoke the condensation and precipitation of the water, which will be collected in a vat. The cooling equipment will be engineered to enable the cooling to take place, but ideally without causing the temperature to fall below 0°C, since the water would then freeze and be more difficult to collect.

For improved performance, the sweeping device is equipped with an air-air exchanger through which the cooled and dried air circulates along with the incoming flow of air, so that part of the cold from the outgoing flow of air is used for the preliminary cooling of the incoming air for increased efficiency.

The cooling equipment is placed along the path of the incoming flow of air between the two circuits of the air-air exchanger. If conventional cooling equipment is used, the evaporator is positioned in the circulation path of the flow between the two circuits of the exchanger, producing the definitive cooling of the mass of air and water condensation, while the condensator is positioned at the outlet of the exchanger's secondary circuit where the dehydrated air is released, in order to use the residual cold to facilitate the condensation of the cooling gas and increase the efficiency of the process even further. In this case, a secondary air intake may be installed at the exit point of the flow recovery device and before the air moves into the condensator so that if the temperature of the incoming air is too high, in hot environments, the secondary air intake will cooperate in evacuating the heat generated in the condensator, equivalent to the heat absorbed by the evaporator from the flow of incoming air plus the energy consumed by the compressor.

### BRIEF DESCRIPTION OF THE DRAWINGS

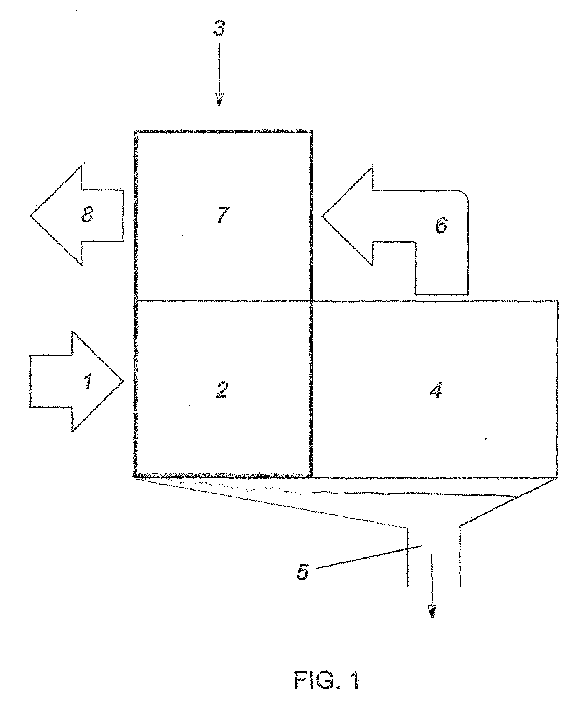

Figure 1 shows a diagram of the invention procedure.
Figures 2 and 3 show a diagram of the invention procedure with improvements.
Figures 4 and 5 show two variants of the invention machine.

### DESCRIPTION OF A PRACTICAL EXECUTION OF THE INVENTION

The procedure to which the invention refers includes the following stages:
Generating a flow of air from a mass from which the humidity is to be extracted. The flow of air can be generated artificially or natural drafts of air can be used.
   - Making the flow of air 1 pass through the secondary 2 of an exchanger 3 for preliminary cooling.
   - Subjecting the flow 1 to a second round of cooling until the temperature is reduced at least to the dew point in order to provoke the condensation of the water vapour o continue the process if initiated during the preliminary cooling. The cooling is generated by a thermal machine 4 consisting of any adequate, known cooling system.
   - Collecting the condensate in collectors 5.
   - Recirculating the outgoing flow 6 of cooled and dried air through the primary 7 of the exchanger 3, obtaining in the secondary 2 the preliminary cooling of the incoming flow 1 described in the second stage, and reducing the energy used by the thermal machine 4 for the definitive cooling. The temperature of the outgoing flow 8 is also increased to reduce the difference between the temperature of the outgoing and incoming flow 1, which will obviously have less of an environmental impact since the incoming flow is taken from the environment.

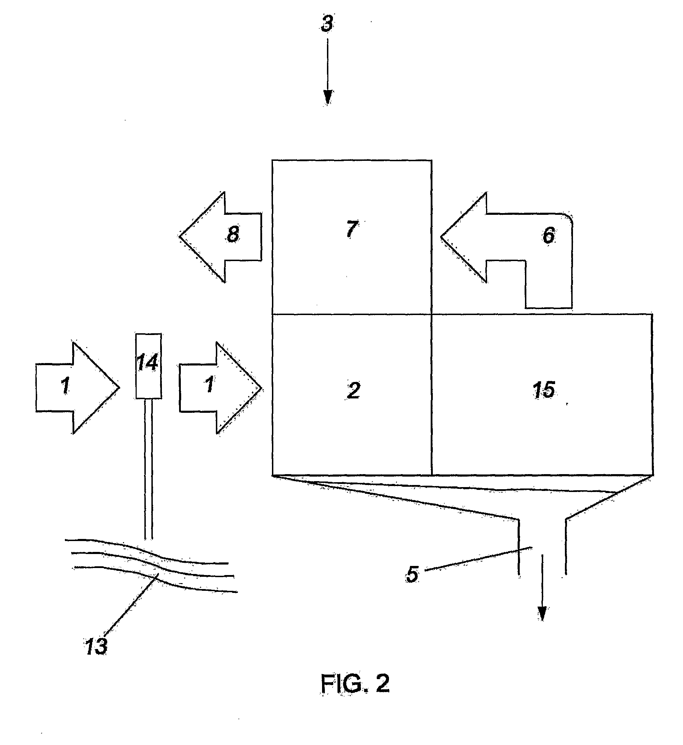

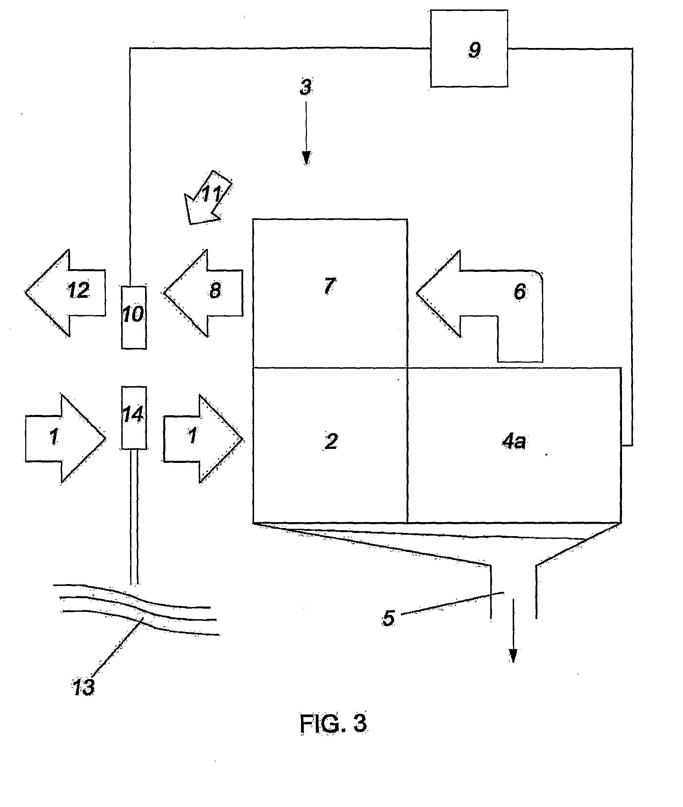

The thermal machine could consists of a heat exchanger 15, as shown in figure 2, or a conventional cooling machine based on a compressor, evaporator and condensator, as shown in figure 3.

Some improvements applicable to the procedure described above consist of:
- Subjecting the flow 1 of incoming air in the process to preliminary cooling by external means which could, for example, be a natural flow 13 of water or water cooled artificially by means of exchangers 14 or by means of an external cooling machine (figures 2 and 3).
- If a conventional cooling machine is used based on a compressor 9, evaporator 4a and condensator 10, the outgoing flow of air 8 is circulated through the condensator. This flow, still cold in comparison to the temperatures generated in the condensation of the cooling gas, cooperates in evacuating the condensation heat, thus increasing the energy efficiency of the process (figure 3).

In this case, when the temperature of the air coming in from the outside is too high, as from very hot environments, the outgoing flow 8 of air can be mixed with a sufficient flow 11 of incoming air from the outside so that the increased flow is capable of evacuating the heat generated in the condensator 10, equivalent to the heat taken from the incoming air by the cooling gas in the evaporator plus the equivalent in calories to the energy consumed by the compressor. The resulting outgoing flow 12 is evacuated to the outside.

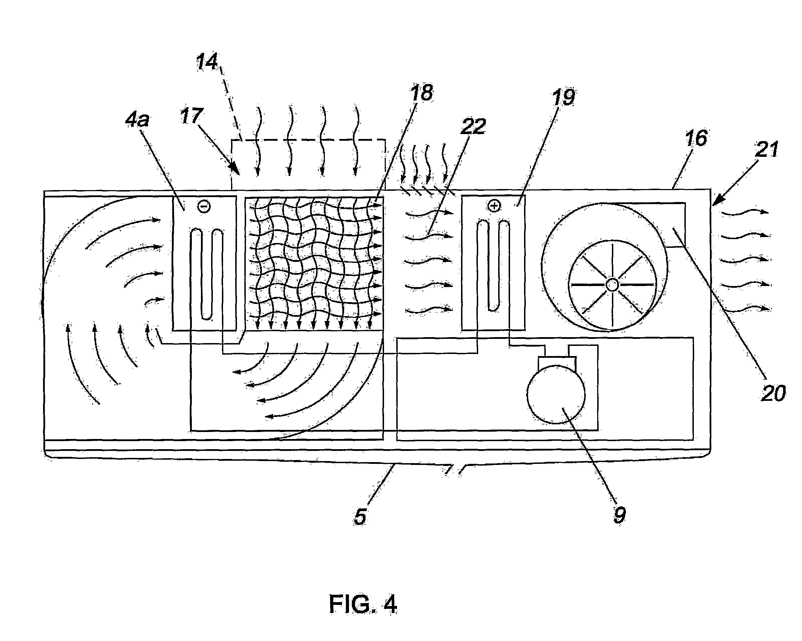

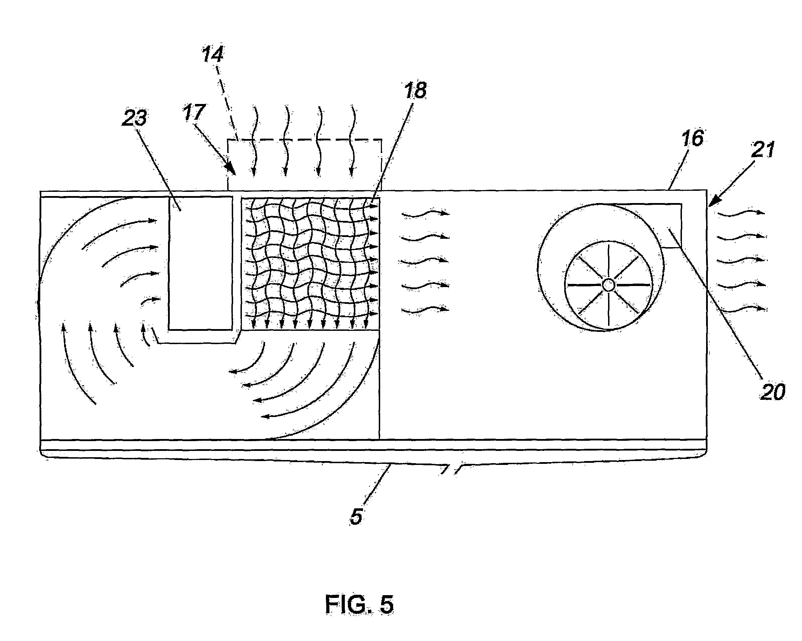

As far as the machine used to implement the procedure to which the invention refers, which is represented in figures 4 and 5, it consists of a sweeping machine 16 equipped with an inlet 17 for the incoming air which is first circulated through an internal air-air exchanger, consisting in this non-limiting example of the invention of a recovery device 18 of the cross flows for preliminary cooling, and then sent to the internal evaporating unit 4a which is part of a convention cooling system, which provokes a drop in the temperature to below the dew point causing the humidity contained in the air to change to a liquid state. The cooling equipment is properly engineered to prevent the temperature from falling below 0°C, at which point the water would change to a solid state.

When exiting the evaporate, the flow of air circulates through the secondary track of the cross flow recovery device 18, using part of the cold for the preliminary cooling of the incoming mass of air.

The machine is also equipped with a condensation unit 19 attached to the cooling equipment so that the residual cold from the flow of dry, outgoing air is used to increase the efficiency of this part of the machine, raising the temperature of the outgoing air and thereby minimising its impact on the environment when it is expelled to the outside.

The machine is also equipped with a turbine or turbines 20 that generate the flow, adjacent to the outgoing air outlet 21.

If the temperature of the incoming air is too high, the flow of dried air may not be sufficient to evacuate the heat generated in the condensator, equivalent to the sum of the heat from the air entering the evaporator and the heat corresponding to the part of the energy consumed by the compressor. In this case, the machine is equipped with an intermediate external air intake 22 positioned between the outlet of the secondary circuit of the flow recovery device and the cooling equipment's condensation unit. This increase in the flow of air circulating through the condensator evacuates the excess heat generated by the compressor.

The cooling equipment is also equipped with a compressor 9.

In order to increase the machine's effectiveness even further, the flow of incoming air can be subjected to additional preliminary cooling using external means 14, such as external cooling equipment, an external exchanger that uses the temperature from a nearby course of water, a water cooling machine or similar.

To collect the condensate, the machine is equipped with a vat underneath the part where the condensation occurs, which is in turn connected to an outlet pipe 5.

Likewise, a variation of the execution of the invention shown in figure 5, the conventional cooling equipment can be replaced by a single air-water exchanger 23 which cools the air thanks to the lower temperature of the water, which may come from a water cooling machine at a hospital, a natural course of water, or from any other source.

Generally speaking, any medium or equipment capable of lowering the temperature of the air flow sufficiently can be used for cooling.

The nature of the invention having been sufficiently described and the manner of executing it in practice, it should be noted that the descriptions given above and represented in the attached drawings are subject to change to the extent that such changes do not alter the fundamental principle.

## Claims

1. Procedure for obtaining water from a mass of atmospheric air **characterised in that** it comprises the following stages: creating a flow of air from a mass of air and circulating it through the secondary of an exchange element for the purposes of preliminary cooling, during which the change of the water from a vapour state to a liquid state may or may not be initiated; subjecting the pre-cooled flow of air to definitive cooling to the point where the temperature falls to at least the dew point in order to provoke a change of state in the water vapour or continue the process if it was initiated during preliminary cooling; collecting the condensate and/or frozen water; recirculating the flow of dry cool air through the primary circuit of the exchangers to use the residual cold for preliminary cooling.

2. Procedure according to claim 1 **characterised in that** natural air currents are used in the generation of air flows.

3. Procedure according to claim 1 **characterised in that** artificial means are used to generate the flow of air.

4. Procedure according to claim 1 **characterised in that** the flow of incoming air can optionally be subjected to additional preliminary cooling before being sent to the exchangers' secondary circuit.

5. Procedure according to claim 4 **characterised in that** the additional preliminary cooling is produced by a cooling machine.

6. Procedure according to claim 4 **characterised in that** the additional preliminary cooling is produced using a flow of water and exchangers.

7. Procedure according to claim 4 **characterised in that** if the definitive cooling is provoked by an evaporator in a conventional cooling machine comprising a compressor, evaporator and condensator, the flow of outgoing air exiting the exchanger's primary circuit will have an impact on the condensator, taking advantage of the residual cold to evacuate the heat generated therein, this being equivalent to the heat taken from the incoming flow of air plus the equivalent in calories of the energy consumed by the compressor.

8. Procedure according to claim 7 **characterised in that** if the temperature of the incoming air is too high, an additional flow of air will be added to the flow of circulating air, after exiting the exchanger's primary circuit and before having an impact on the condesnsator, which will cooperate in evacuating the heat generated in the condensator.

9. A machine for obtaining water by condensing the humidity in a mass of air **characterised in that** it comprises a sweeping machine with a main intake and outlet, between which a forced flow of air is established; the machine comprises cooling equipment which is adequately engineered to lower the temperature of the air flow to below the dew point in order to condense the humidity in the air; at least an air-air exchanger to use the residual cold of the flow of dehydrated air exiting the cooling equipment to pre-cool the incoming flow; and at least a turbine or fan to generate the incoming-outgoing flows through the respective inlets-outlets; the machine is also equipped with a collector or vat to collect the condensate.

10. A machine according to claim 9 **characterised in that** the cooling equipment comprises a compressor, an evaporating unit and a condensation unit so that the evaporating unit acts as the cooling element of the cooling equipment which is placed inside the loop described by the flow between the two circuits of the cross flow recovery device in order to reduce the temperature of the air to below the dew point, while the condensation unit is positioned at the outlet of the cooled and dehydrated flow of air from the secondary circuit of the flow recovery device, after the connection with the intermediate intake in order to take advantage of the residual cold to evacuate the heat in the condensator and thereby improve the machine's general efficiency.

11. A machine according to claim 10 **characterised in that** if the temperature of the incoming air is too high, the machine is also equipped with an intermediate intake of outside air that is connected to the circulating flow at the outlet from the secondary circuit of the air-air exchangers and before entering the condesator so that the extra flow is able to cooperate in the evacuation of the heat generated in the condensator, equivalent to the heat from the flow of incoming air in the evaporator plus the equivalent of the energy consumed by the compressor.

12. A machine according to claim 9 **characterised in that** the turbine or fan is located adjacent to the outlet through which the cold, dehydrated air is expelled from the machine.

13. A machine according to claim 9 **characterised in that** it is equipped with an additional preliminary cooling element for the incoming air.

14. A machine according to claim 13 **characterised in that** the additional preliminary cooling element consists of conventional cooling equipment.

15. A machine according to claim 13 **characterised in that** the preliminary cooling element consists of an exchangers that uses the cold from a natural water current and/or from a flow of water cooled by a machine.

16. A machine according to claim 9 **characterised in that** the air-air exchangers is composed of a cross flow recovery device.

17. A machine according to claim 9 **characterised in that** the cooling equipment consists of an air-air exchanger with two circuits: the air from which the humidity is to be extracted flows through one circuit and a flow of cool water flows through the other.

18. A machine according to claim 17 **characterised in that** the flow of low temperature water comes from a hospital cooling machine.
